Europäisches Patentamt

European Patent Office

Office européen des brevets

(11) Veröffentlichungsnummer: **0 224 101**
**B1**

## (12) EUROPÄISCHE PATENTSCHRIFT

(45) Veröffentlichungstag der Patentschrift:
11.07.90

(51) Int. Cl.⁵: **G21C 17/06**

(21) Anmeldenummer: 86115517.4

(22) Anmeldetag: 08.11.86

(54) **Verfahren zum Prüfen der Abmessungen eines Brennelementes für Kernreaktoren.**

(30) Priorität: 29.11.85 DE 3542200

(43) Veröffentlichungstag der Anmeldung:
03.06.87 Patentblatt 87/23

(45) Bekanntmachung des Hinweises auf die Patenterteilung:
11.07.90 Patentblatt 90/28

(84) Benannte Vertragsstaaten:
BE CH DE FR IT LI NL SE

(56) Entgegenhaltungen:
EP-A- 0 053 066
EP-A- 0 080 418
EP-A- 0 082 102
EP-A- 0 147 037

PATENTS ABSTRACTS OF JAPAN, Band 8,
Nr. 269 (P-319)[1706], 8. Dezember 1984; &
JP-A-59 137 807 (GENSHI NENRIYOU KOGYO
K.K.) 08.08.1984

(73) Patentinhaber: ABB Reaktor GmbH, Dudenstrasse 44,
D-6800 Mannheim 1(DE)

(72) Erfinder: Scharpenberg, Rainer, Dipl.-Ing., Im
Krappenklingen 32, D-6948 Wald-Michelbach(DE)

(74) Vertreter: Rupprecht, Klaus, Dipl.-Ing. et al, c/o BBC
Brown Boveri Aktiengesellschaft ZPT
Postfach 100351 Kallstadter Strasse 1,
D-6800 Mannheim 1(DE)

**Beschreibung**

Die Erfindung betrifft ein Verfahren zum Prüfen der Abmessungen eines Brennelementes für Kernreaktoren, das aus einem Bündel längserstreckter Brennstäbe besteht, die unter Belassung von Zwischenräumen in Reihen angeordnet sind, mit zwei parallel erstreckten Sonden, die an ihren freien Enden je einen Ultraschallprüfkopf tragen und relativ zu dem in einer Wasservorlage angeordneten Brennelement bewegt werden, wobei der eine Ultraschallprüfkopf die Ultraschallwellen aussendet und der andere Ultraschallprüfkopf die Ultraschallwellen empfängt und wobei während der Sondenbewegung eine kontinuierliche Beschallung erfolgt.

Ein derartiges Verfahren ist aus der EP-A-82 102 bekannt. Dort wird an gegenüberliegenden Seiten des Brennelementes ein als Sender und Empfänger wirkender Ultraschallprüfkopf entlang der äußeren Brennstabreihe eines Brennelementes geführt, der die Brennstäbe beschallt.

Das von den Brennstäben der äußeren Reihe zurücklaufende Echo wird zu den Koordinaten der Meßeinrichtung in bezug gesetzt und dadurch die Position eines jeden Brennstabes zu den Achsen X–Y des Koordinatenfeldes bestimmt. Mit diesem Verfahren können nur die außenliegenden Brennstäbe eines Brennstabbündels vermessen werden. Außerdem sind bei der direkten Beschallung der Brennstäbe Fehlmessungen nicht auszuschließen, da z.B. mit einem Belag versehene Stäbe den Echorücklauf verfälschen können. Zur Korrektur der Fortpflanzungsgeschwindigkeit in Wasser in Abhängigkeit zur Temperatur des Wassers wird einer der an gegenüberliegenden Seiten angeordneten Prüfköpfe als Sender und der andere als Empfänger eingesetzt.

Aus der EP-A 0 082 102 ist ein Verfahren zum Auffinden defekter Brennstabhüllrohre bekannt, wobei ein Hüllrohr durchschallt wird. Die Art des an den Empfängerprüfkopf gelangenden Umlaufechos gibt Aufschluß über einen Wassereinschluß im Hüllrohr. Die Prüfung der Abmessungen eines Brennelementes ist dort nicht vorgesehen.

Aus JP-A 5 9137 807 ist eine nach dem Echorücklaufsystem arbeitende Einrichtung zur Bestimmung der die Peripherie eines Brennelementes bildenden Brennstäbe bekannt.

Die EP-A 0 147 037 setzt zur Überprüfung der Brennstabanordnung eine einzige Sonde ein. Diese Sonde weist einen Sender und zwei Empfänger auf und verwendet daher ebenfalls das Echoprinzip.

Letztendlich ist aus der EP-A 0 053 066 eine Maßbestimmung eines Brennelementes bekannt. Dort ist eine an dem Sondenende angebrachte Lichtquelle vorgesehen, die über einen Spiegel umgelenkt wird. Zur Bestimmung einer Verbiegung der die Peripherie des Brennelementes bildenden Stäbe ist eine Frontalbeschallung vorgesehen, die jedoch mit einem Echorücklauf arbeitet.

Es ist die Aufgabe der Erfindung, ein Verfahren der eingangs genannten Art anzugeben, mit dem alle Stabpositionen angefahren werden können und eine Echoauswertung nicht erforderlich ist.

Gelöst wird diese Aufgabe erfindungsgemäß durch die im Kennzeichen des Anspruchs 1 angegebenen Merkmale.

Durch diese Maßnahmen gelingt allein mit der Auswertung der Schalldruckänderung im Bereich einer Wasserstrecke zwischen Sende- und Empfängerprüfkopf eine zuverlässige Aussage über die Änderung der Spaltbreite zwischen zwei Brennstäben. Mit der wiederholten Beschallung mit Ultraschallimpulsen lassen sich eindeutige Aussagen über die Spaltbreite gewinnen, da sich die Signale, die einen Brennstab durchlaufen, leicht von denjenigen, die die Wasserstrecke zwischen Sende- und Empfängerprüfkopf durchlaufen, unterscheiden lassen.

Eine andere erfindungsgemäße Lösung ist im Kennzeichen des nebengeordneten Anspruchs 2 angegeben.

Die Änderung des vom Empfängerprüfkopf aufgenommenen Signals ist hier ein Indiz dafür, daß der freie Schallweg in der Wasserstrecke durch einen Brennstab gestört wird. Die Positionen der Signaländerung eines Brennstabes auf mehreren Ebenen, in Achsrichtung des Stabes betrachtet, ergibt ein Bild über die Erstreckung des Brennstabes relativ zu einer gedachten Nullinie. Abweichungen der Staberstreckung von der Nullinie weisen auf eine Verbiegung hin.

Anhand von Ausführungsbeispielen und den Figuren 1 bis 3a werden die erfindungsgemäßen Verfahren und weitere vorteilhafte Ausgestaltungen beschrieben.

Dabei zeigt die

Fig. 1 ein in einer Wasservorlage angeordnetes Brennelement in einer Vorderansicht,

Fig. 1a einen Querschnitt der Fig. 1 entlang der Linie I-I,

Fig. 2a-2f verschiedene Meßphasen zur Bestimmung des Abstandes zwischen zwei Brennstäben,

Fig. 3 die Bestimmung von Brennstabverbiegungen und

Fig. 3a einen Querschnitt durch ein Brennelement entlang der Linie III-III der Fig. 3.

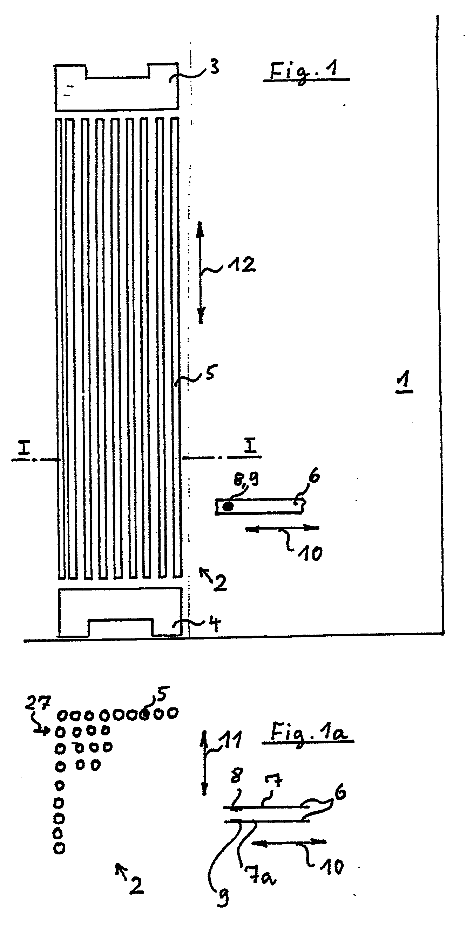

In den Figuren 1 und 1a ist mit 1 ein Teil eines Wasserbeckens bezeichnet, in dem ein Brennelement 2 angeordnet ist. Das Brennelement besteht aus einem oberen und einem unteren Endstück 3, 4 zwischen welchen sich eine Vielzahl von Brennstäben 5 erstrecken. Wie aus einem Querschnitt des Brennelementes zu ersehen ist sind die Brennstäbe 5 in Reihen angeordnet und weisen einen zueinander durch nicht dargestellte Halteelemente bestimmten Abstand auf. Eine Ultraschall-Sonde 6 ist mit zwei Fingern 7, 7a ausgestattet, die an ihren freien Enden gegeneinandergerichtete Ultraschallprüfköpfe 8, 9 tragen, wovon einer zum Senden und der andere zum Empfangen der Schallwellen eingesetzt wird. Die Stärke, die Länge und der Abstand der Finger zueinander ist so ausgelegt, daß beim Einfahren der Sonde 6 in Pfeilrichtung 10 jeweils ein Brennstab 5 bzw. eine Brennstabreihe zwischen den Fingern 7, 7a angeordnet ist. Die Sonde 6 ist mittels eines nicht dargestellten Sondenträgers neben der Pfeilrichtung 10 noch in Pfeilrichtung 11 und 12 verfahrbar um auch in andere Brennstabreihen sowie in verschiedenen Ebenen, in Achsrichtung der Brennstäbe betrachtet, einfahren zu können.

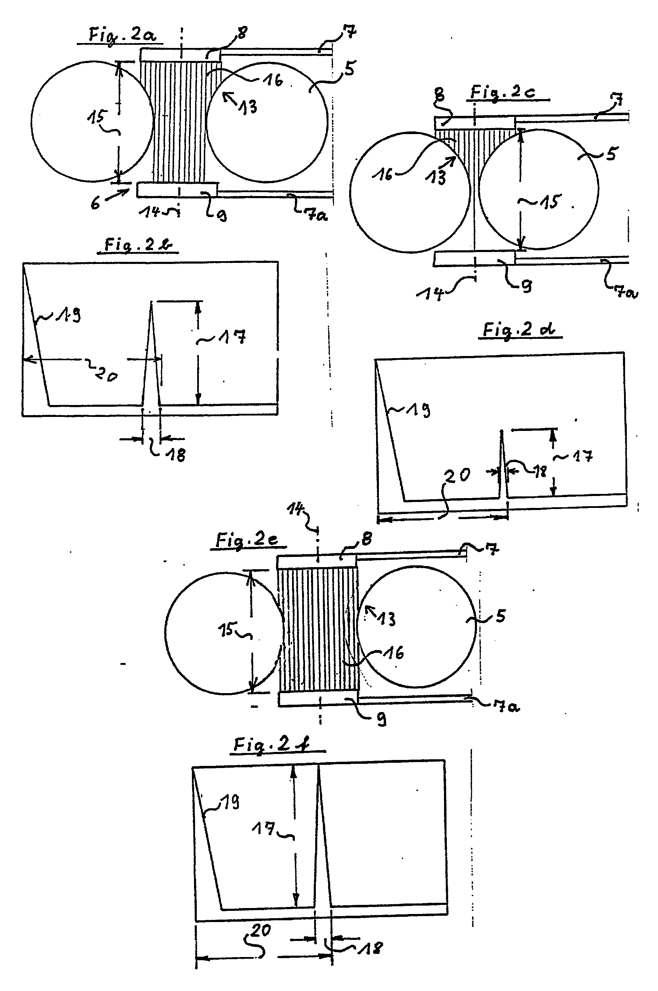

Das Prüfen der Abstände zwischen den einzelnen Brennstäbe wird anhand der Figuren 2a bis 2f erläutert. Die Figuren 2a, 2c und 2e zeigen jeweils zwei aus der Figur 1a in einem größeren Maßstab dargestellte Brennstäbe 5. Während nach der Figur 2a die Brennstäbe in einem Sollabstand zueinander angeordnet sind, weisen die Brennstäbe nach der Figur 2c einen gegenüber dem Sollabstand geringeren und die Brennstäbe nach der Figur 2e einen größeren Abstand auf. Eine derartige Abstandsänderung ist in der Regel auf Brennstabverbiegungen zurückzuführen, die während des Einsatzes des Brennelementes im Kernreaktor gelegentlich auftreten können.

Zum Prüfen des Abstandsmaßes fahren die Finger 7, 7a der Sonde 6 in die Gassen zwischen den Brennstäben 5 ein. Dabei werden vom Sendeprüfkopf 8 ständig Ultraschallwellen 13 ausgesandt, die vom Empfängerprüfkopf 9 aufgenommen werden. Durch das kontinuierliche Beschallen läßt sich in Zusammenhang mit einem Oszillographen die Position der Prüfköpfe bestimmen, da die Amplitude bei einem Durchlaufen der Brennstäbe eine andere Charakteristik aufweist als beim Durchlaufen einer Wasserstrecke. Sobald die Prüfköpfe 8, 9 der Sonde 6 mit ihrer Symmetrieachse 14 die Mittenposition des tatsächlichen Abstandes zwischen zwei Brennstäben erreicht hat, wird die Höhe und/oder die Breite der Amplitude, die bei der an dieser Position von den Schallwellen durchlaufenen Wasserstrecke 15 gebildet wird, zur Bestimmung des Abstandsmaßes zwischen zwei Brennstäben verwendet. Die Linien 16 in den Figuren 2a, 2c und 2e symbolisieren einen vom Sendeprüfkopf 8 ausgehenden Schallstrahl, der in seinen Randbereichen je nach Spaltbreite (Abstandsmaß zwischen zwei Brennstäben) mehr oder weniger geschwächt wird und in verminderter Intensität zum Empfangsprüfkopf 9 gelangt. Dies drückt sich in einer unterschiedlichen Amplitudenhöhe 17 bzw. Amplitudenbreite 18 aus, wie sie in den Figuren 2b, 2d und 2f zu erkennen ist. Dabei ist der Figur 2a die Figur 2b, der Figur 2c die Figur 2d und der Figur 2e die Figur 2f zugeordnet. Die Figuren 2b, 2d und 2f stellen Bildschirmausschnitte eines Oszilographen dar. Ein Sendeimpuls 19 trifft nach einer mit 20 symbolisierten Laufzeit beim Empfangsprüfkopf 9 ein. Die Amplitudenhöhe 17 bzw. die Amplitudenbreite 18 stehen in einem bestimmten Verhältnis zum Abstandsmaß zwischen zwei Brennstäben. Einen großen Abstandsmaß zwischen zwei Brennstäben 5 ist eine größere Amplitudenhöhe 17 bzw. Amplitudenbreite 18 zugeordnet als einem kleinen Abstandsmaß. Das Breitenmaß der Prüfköpfe 8, 9 ist dabei so zu wählen, daß bei der größten zu erwartenden Spaltbreite (Abstandsmaß) der Schallstrahl breiter ist als diese größte Spaltbreite. Bei entsprechender Eichung des Bildschirmes oder eines anderen Aufnahmegerätes läßt sich das tatsächliche Abstandsmaß mit einer Genauigkeit von einem Zehntel Millimeter ablesen.

Verkörpert die Figur 2a den Sollabstand zwischen zwei Brennstäben, so bildet die Amplitude nach der Figur 2b die zugehörige Sollamplitude. Ein Vergleich der jeweils ermittelten Amplituden für die Wasserstrecke zwischen dem Sendeprüfkopf und dem Empfangsprüfkopf (z. B. Figur 2d und 2f) mit dieser Sollamplitude erlaubt auf einfache Weise die Feststellung der Abweichung nach der einen oder anderen Richtung.

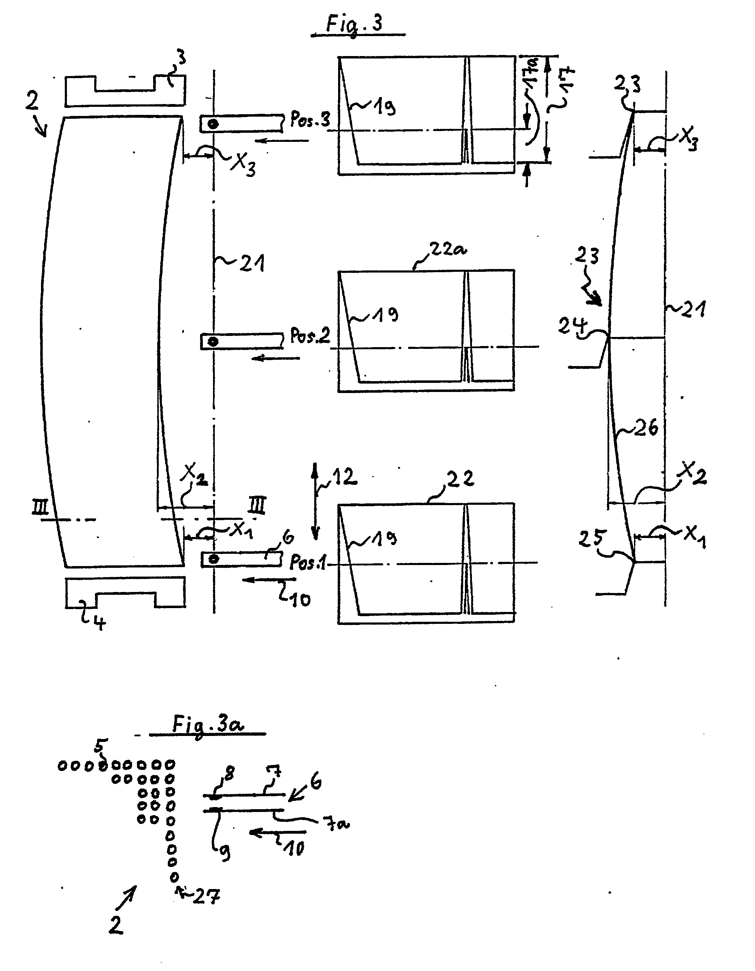

Nach einem anhand der Figuren 3 und 3a zu erläuternden Verfahren läßt sich der Verbiegungsgrad eines Brennstabes über seine Längserstreckung ermitteln. Dort ist ein Brennelement 2 dargestellt, bei dem alle Brennstäbe 5 beispielsweise aufgrund eines unsachgemäßen Transportes des Brennelementes die gleiche Verbiegung aufweisen. In einem solchen Fall reicht es zur Bestimmung der Verbiegung aus, wenn die Brennstäbe einer äußeren Brennstabreihe überprüft werden. Die in Zusammenhang mit der Figur 1 näher beschriebene Ultraschallsonde 6 wird nach den Figuren 3 und 3a von einer frei gewählten Basislinie 21 aus in Pfeilrichtung 10 verfahren, so daß die Finger 7, 7a der Sonde 6 einen Brennstab 5 zwischen sich aufzunehmen vermögen. Während der Sondenbewegung in Pfeilrichtung 10 verlaufen ständig Sendeimpulse 19 vom Sendeprüfkopf 8 zum Empfangsprüfkopf 9. Auf einem Bildschirm 22 wird daher so lange eine der Wasserstrecke zwischen den Prüfköpfen 8, 9 entsprechende Amplitudenhöhe 17 dargestellt bis das Wassersignal von einem Brennstab gestört wird und sich dann eine geringere Amplitudenhöhe 17a einstellt. Der Weg, den die Sonde 6 von der Basislinie 21 bis zur ersten Änderung des Wasserstreckensignals zurücklegt wird mit X1 bezeichnet und ist auf einer am rechten Rand der Figur 3 dargestellten Schreiberaufzeichnung 23 dokumentiert. Die Sonde 6, die diese erste Messung aus der Position 1 am unteren Brennstabende vorgenommen hat, wird nunmehr in Pfeilrichtung 12 bis zur Position 2 verfahren. Jetzt wird wiederum die Sonde 6 unter ständigem Schallen vom Sendeprüfkopf 8 zum Empfangsprüfkopf 9 von der Basislinie 21 in Pfeilrichtung 10 verfahren bis das Wasserstreckensignal durch den Brennstab eine Störung erfährt. Die dadurch ausgelöste Amplitudenhöhenänderung ist aus dem der Position 2 zugeordneten Bildschirm 22a zu erkennen. Der von der Basislinie 21 bis zur Änderung des Wasserstreckensignals zurückgelegte Weg ist mit X2 bezeichnet und ebenfalls in dem Schreiberausdruck dokumentiert. Nachdem die Sonde in eine dem oberen Brennstabende zugeordnete Position 3 in Pfeilrichtung 12 verfahren worden ist, erfolgt die Vermessung nach dem gleichen Verfahren wie zu Position 1 und 2 beschrieben. Der von der Basislinie 21 bis zur Änderung des Wasserstreckensignals zurückgelegte Weg ist mit X3 bezeichnet und in dem Schreiberausdruck entsprechend dokumentiert. Eine Verbindung der gefundenen Wegpunkte 23, 24 und 25 mit einer Linie 26 zeigt bei maßstabgerechter Aufzeichnung den Verlauf der Stabverbiegung.

Nach dem beschriebenen Verfahren lassen sich neben den äußeren Brennstäben einer Reihe auch die restlichen Brennstäbe des Brennelementes vermessen. Dazu wird jeder weitere Brennstab ebenfalls von der Basislinie 21 aus angefahren. Die zwischen dem zu vermessenden Brennstab und der Basislinie 21 liegenden Brennstäbe bleiben dabei unberücksichtigt. Maßgebend ist die Wasserstrecke, die vor Erreichen des zu prüfenden Brennstabes durchschallt wird. In der Schreiberaufzeichnung wird dann nur der Fahrweg festgehalten, den die Sonde 6 von der Basislinie 21 bis zur Änderung des dem zu prüfenden Brennstab vorgeordneten Wasserstreckensignals zurücklegt.

## Patentansprüche

1. Verfahren zum Prüfen der Abmessungen eines Brennelementes (2) für Kernreaktoren, das aus einem Bündel längserstreckter Brennstäbe (5) besteht, die unter Belassung von Zwischenräumen in Reihen (27) angeordnet sind, mit einer Sonde (6) die mit zwei parallel erstreckten Fingern (7, 7a) ausgestattet ist, welche an ihren freien Enden je einen Ultraschallprüfkopf (8, 9) tragen und relativ zu dem in einer Wasservorlage (1) angeordneten Brennelement (2) bewegt werden, wobei der eine Ultraschallprüfkopf (8) die Ultraschallwellen aussendet und der andere Ultraschallprüfkopf (9) die Ultraschallwellen empfängt und wobei während der Sondenbewegung eine kontinuierliche Beschallung erfolgt, dadurch gekennzeichnet, daß

    a) die Sonde (6) von der Seite her in die Räume zwischen den Brennstäben (5) eingefahren wird, bis die Symmetrieachse (14) der Ultraschallprüfköpfe (8, 9) die Mittenposition des tatsächlichen Abstandes zwischen zwei Brennstäben erreicht hat,

    b) vom Sendeprüfkopf (8) ein Ultraschallstrahl ausgesandt wird, der breiter ist als die größte zu erwartende Spaltbreite, und

    c) die vom Empfängerprüfkopf (9) registrierten Intensitäten des durch den Spalt zwischen zwei Stäben übertragenen Ultraschallstrahles mit einer dem Sollabstand zwischen zwei Brennstäben entsprechenden Intensität verglichen werden, wobei die Intensitätswerte als Maßstab für die Spaltbreite dienen.

2. Verfahren zum Prüfen der Abmessungen eines Brennelementes (2) für Kernreaktoren, das aus einem Bündel längserstreckter Brennstäbe (5) besteht, die unter Belassung von Zwischenräumen in Reihen (27) angeordnet sind, mit einer Sonde (6), die mit zwei parallel erstreckten Fingern (7, 7a) ausgestaltet ist, welche an ihren freien Enden je einen Ultraschallprüfkopf (8, 9) tragen und relativ zu dem in einer Wasservorlage (19) angeordneten Brennelement (2) bewegt werden, wobei der eine Ultraschallprüfkopf (8) die Ultraschallwellen aussendet und der andere Ultraschallprüfkopf (9) die Ultraschallwellen empfängt und wobei während der Sondenbewegung eine kontinuierliche Beschallung erfolgt, dadurch gekennzeichnet, daß

    a) die Finger (7, 7a) der Sonde (6) von einer parallel zur Achse des Brennelementes verlaufenden Basislinie (21) aus solange bewegt werden, bis die Intensität des empfangenen Ultraschallsignals durch einen zwischen den beiden Fingern liegenden Brennstab vermindert wird,

    b) der Abstand zur Basislinie registriert wird, und

    c) die Fahrweise und Registrierung auf verschiedenen in Achsrichtung des Brennelements betrachteten Ebenen zum gleichen Brennstab hin durchgeführt wird, um die Abweichung des axialen Verlaufs des Brennstabes gegenüber der Achse des Brennelementes zu ermitteln.

3. Verfahren zum Prüfen der Abmessungen eines Brennelementes (2) für Kernreaktoren, das aus einem Bündel längserstreckter Brennstäbe (5) besteht, die unter Belassung von Zwischenräumen in Reihen angeordnet sind, mit zwei parallelerstreckten Sonden (6) die an ihren freien Enden je einen Ultraschallprüfkopf (8, 9) tragen und relativ zu dem in einer Wasservorlage (19 angeordneten Brennelement (2) bewegt werden, wobei der eine Ultraschallprüfkopf (8) die Ultraschallwellen aussendet und der andere Ultraschallprüfkopf (9) die Ultraschallwellen empfängt, dadurch gekennzeichnet, daß die Sonde (6) von der Seite her in die Räume zwischen den Brennstäben (5) eingefahren werden und dabei mindestens einen Brennstab (5) einer Brennstabreihe (27) zwischen sich aufnehmen, daß während der Sondenbewegung kontinuierlich beschallt wird, daß die Position einer ersten Wassersignalschächung registriert wird, daß in verschiedenen Ebenen in Achsrichtung eines Brennstabes betrachtet am gleichen Brennstab die Position der Wassersignalschwächung bestimmt wird und daß eine Verbindunglinie (26) zwischen den Bestimmten Positionen den axialen Verlauf eines Brennstabes (5) wiedergibt.

## Claims

1. Method of checking the dimensions of a fuel assembly (2) for nuclear reactors, which assembly consists of a cluster of elongated fuel rods (5), which are arranged in rows (27) with spaces left in between, having a probe (6), which is equipped with two parallelextending fingers (7, 7a), which each bear at their free ends an ultrasonic test head (8, 9) and are moved relatively to the fuel assembly (2) arranged in a water pool (1), the one ultrasonic test head (8) emitting the ultrasonic waves and the other ultrasonic test head (9) receiving the ultrasonic waves, and a continuous exposure taking place during the probe movement, characterized in that

    a) the probe (6) is inserted from the side into the spaces between the fuel rods (5), until the axis of symmetry (14) of the ultrasonic test heads (8, 9) has reached the mid position of the actual distance between two fuel rods,

    b) an ultrasonic bean is emitted from the transmitting test head (8), which beam is wider than the largest gap width to be expected, and

    c) the intensities registered by the receiver test head (9) of the ultrasonic beam transmitted through the gap between two rods are compared with an intensity corresponding to the nominal distance between two fuel rods, the intensity values sewing as a measure of the gap width.

2. Method of checking the dimensions of a fuel assembly (2) for nuclear reactors, which assembly consists of a cluster of elongated fuel rods (5), which are arranged in rows (27) with spaces left in between, having a probe (6), which is equipped with two parallelextending fingers (7, 7a), which each bear at their free ends an ultrasonic test head (8, 9) and are moved relatively to the fuel assembly (2) arranged in a water pool (1), the one ultrasonic test head (8) emitting the ultrasonic waves and the other ultrasonic test head (9) receiving the ultrasonic waves, and a continuous exposure taking place during the probe movement, characterized in that
   a) the fingers (7, 7a) of the probe (6) are moved from a base line (21), running parallel to the axis of the fuel assembly, until the intensity of the ultrasonic signal received is reduced by a fuel rod lying between the two fingers,
   b) the distance from the base line is registered and
   c) the travelling mode and registration are carried out on various planes viewed in axial direction of the fuel assembly with respect to the same fuel rod, in order to determine the deviation of the axial run of the fuel rod in relation to the axis of the fuel assembly.

3. Method of checking the dimensions of a fuel assembly (2) for nuclear reactors, which assembly consists of a cluster of elongated fuel rods (5), which are arranged in rows (27) with spaces left in between, having two parallel-extending probes (6), which each bear at their free ends an ultrasonic test head (8, 9) and are moved relatively to the fuel assembly (2) arranged in a water pool (1), the one ultrasonic test head (8) emitting the ultrasonic waves and the other ultrasonic test head (9) receiving the ultrasonic waves, and a continuous exposure taking place during the probe movement, characterized in that the probes (6) are inserted from the side into the spaces between the fuel rods (5) accommodating at least one fuel rod of a row (27) of fuel rods between the probes, continuing irradiation during the movement of the probes, determining and recording the position of a first water signal attenuation, determining and recording the position of the water signal attenuation at various levels on the same fuel rod and reproducing the axial profile of a fuel rod by connecting a line (26) between the determined and recorded positions.

## Revendications

1. Procédé de contrôle des dimensions d'un assemblage combustible (2) pour réacteurs nucléaires, lequel est constitué par un faisceau de crayons combustibles (5) allongés qui sont disposés en rangées (27) en laissant subsister des espaces intermédiaires au moyen d'une sonde (6) qui est équipée de deux doigts (7, 7a) qui, s'étendant parallèlement, portent respectivement un palpeur à ultra-sons (8, 9) à leurs extrémités libres et que l'on déplace par rapport à l'assemblage combustible (2) installé dans une piscine (1), l'un des palpeurs (8) émettant des ondes ultrasonores et l'autre palpeur (9) recevant les ondes ultrasonores et une émission d'ultrasons étant effectuée en continu pendant le déplacement de la sonde, caractérisé par le fait que
   a) on introduit la sonde (6) sur le côté dans les espaces subsistant entre les crayons combustibles (5) jusqu'à ce que l'axe de symétrie (14) des palpeurs à ultrasons (8, 9) ait atteint la position médiane de la distance effective entre deux crayons combustibles,
   b) le palpeur émetteur (8) émet un rayon ultrasonore qui est plus large que la plus grande largeur d'intervalle à laquelle il faut s'attendre,
   c) on compare les intensités, enregistrées par le palpeur récepteur (9) du rayon ultrasonore transmis par l'intervalle entre deux crayons à une intensité correspondant à la distance de consigne entre deux crayons combustibles, les valeurs d'intensité servant de critères à la largeur d'intervalle.

2. Procédé de contrôle des dimensions d'un assemblage combustible (2) pour réacteurs nucléaires, lequel est constitué par un faisceau de crayons combustibles (5) allongés qui sont disposés en rangées (27) en laissant subsister des espaces intermédiaires au moyen d'une sonde (6) qui est équipée de deux doigts (7, 7a) qui, s'étendant parallèlement, portent respectivement un palpeur à ultrasons (8, 9) à leurs extrémités libres et que l'on déplace par rapport à l'assemblage combustible (2) installé dans une piscine (1), l'un des palpeurs (8) émettant des ondes ultrasonores et l'autre palpeur (9) recevant les ondes ultrasonores et une émission d'ultrasons étant effectuée en continu pendant le déplacement de la sonde, caractérisé par le fait que
   a) à partir d'une ligne de base 21, disposée parallèlement à l'axe de l'assemblage combustible, on déplace les doigts (7, 7a) de la sonde (6) jusqu'à ce que l'intensité du signal ultrasonore reçu soit diminuée par un crayon combustible se trouvant entre les deux doigts;
   b) on enregistre la distance par rapport à la ligne de base; et
   c) on effectue le déplacement et l'enregistrement sur différents plans, considérés dans le sens axial de l'assemblage combustible, en direction du même crayon combustible, pour déterminer l'écart du tracé axial du crayon combustible par rapport à l'axe de l'assemblage combustible.

3. Procédé de contrôle des dimensions d'un assemblage combustible (2) pour réacteurs nucléaires, assemblage constitué par un faisceau de crayons combustibles (5) allongés qui sont disposés en rangées, des espaces intermédiaires étant laissés entre eux, au moyen de deux sondes (6) parallèles qui portent chacune à leurs extrémités libres un palpeur à ultra-sons (8, 9) et sont déplacées par rapport à l'assemblage combustible (2) installé dans une piscine (1), l'un des palpeurs (8) émettant les ondes ultra-sonores et l'autre palpeur (9) recevant les ondes ultra-sonores, caractérisé en ce que les sondes (6) sont introduites par le côté dans les espaces entre les crayons combustibles (5) et prennent entre elles alors au moins un crayon combustible (5) d'une rangée (27) de crayons combustibles, que l'exposition à l'action des ultra-sons a lieu en continu pendant le déplacement des sondes, que la position d'une première atténuation du signal de l'eau est enregistrée, que la position de l'atténuation du signal de l'eau est déterminée dans différents plans suivant la direction axiale d'un crayon combustible, pour le même crayon combustible, et qu'une ligne de jonction (26) reliant les positions déterminées représente l'allure axiale d'un crayon combustible (5).

_Fig. 1_

_Fig. 1a_

EP 0 224 101 B1

Fig. 2a

Fig. 2b

Fig. 2c

Fig. 2d

Fig. 2e

Fig. 2f

_Fig. 3_

_Fig. 3a_